# EUROPÄISCHE PATENTSCHRIFT

(11) **EP 2 197 708 B1**
(45) Veröffentlichungstag und Bekanntmachung des Hinweises auf die Patenterteilung: **07.03.2012**
(21) Anmeldenummer: 08804030.8
(22) Anmeldetag: 11.09.2008
(51) Int. Cl.: B60R 11/04

(54) **GERÄTEANORDNUNG ZUR AUSFÜHRUNG EINER FAHRERASSISTENZFUNKTION**
DEVICE ARRANGEMENT FOR EXECUTING A DRIVER ASSISTANCE FUNCTION
AGENCEMENT D'APPAREILS POUR EXÉCUTER UNE FONCTION D'AIDE AU CONDUCTEUR

(30) Priorität: 10.10.2007 DE 102007048605; 30.11.2007 DE 102007057744
(43) Veröffentlichungstag der Anmeldung: 23.06.2010
(73) Patentinhaber: Robert Bosch GmbH, 70442 Stuttgart (DE)
(72) Erfinder: MEISSNER, Manfred, 71665 Vaihingen/Enz (DE); JANSSEN, Holger, 31840 Hessisch Oldendorf (DE); NIEHSEN, Wolfgang, 31162 Bad Salzdetfurth (DE); WINGBERMUEHLE, Jochen, 30966 Hemmingen (DE); SCHICK, Jens, 71083 Herrenberg (DE); REPPICH, Andreas, Leonberg 71229 (JP)
(86) Internationale Anmeldenummer: PCT/EP2008/062065
(87) Internationale Veröffentlichungsnummer: WO 2009/049972

(56) Entgegenhaltungen:
- WO-A-2005/090124
- WO-A-2008/052178
- DE-A1-102006 007 343
- US-A1- 2003 043 029

## Beschreibung

### Stand der Technik

Die Erfindung betrifft eine Geräteanordnung zur Ausführung einer Fahrerassistenzfunktion nach dem Oberbegriff des Patentanspruchs 1.

Aus dem Stand der Technik sind verschiedene Fahrerassistenzsysteme bzw. Fahrzeugsysteme, wie beispielsweise Nachtsichtgeräte, Fahrspurerkennungssysteme, Verkehrszeichenerkennungssysteme, Rückfahrunterstützungssysteme, Fahrzeugerkennungssysteme usw. bekannt, die elektronische Kameras bzw. Bildaufiiahmevorrichtungen mit einem Bildaufnahmesensor verwenden. Der Bildaufiiahmesensor ist beispielsweise als CCD- oder CMOS-Sensorchip ausgeführt, der zur Bildverarbeitung von einer leistungsfähigen Rechnereinheit ausgewertet wird.

Zur videobasierten Überwachung des Umfeldes des Fahrzeugs sowie für die Realisierung der Fahrerassistenzfunktionen können neben fest im Fahrzeug verbauten Kameras auch abgesetzte, nachträglich zu montierende Kameramodule verwendet werden. Für diese Kameramodule kann zur Durchführung von Anzeigefunktionen eine drahtlose Bildübertragung an eine für den Fahrer einsehbare optische Anzeigeeinheit verwendet werden. Die Energieversorgung kann beispielsweise aus einem Akkupack erfolgen. Als optische Anzeigeeinheit können beispielsweise mobile Endgeräte wie beispielsweise Computer, persönliche digitale Assistenten (PDAs), Mobiltelefone usw. verwendet werden. Durch die abgesetzten Kameramodule kann sich im Fahrzeug jedoch ein höherer Aufwand für deren Montage, Verkabelung und Energieversorgung ergeben.

Zudem können mobile Endgeräte, wie Computer, PDAs, Mobiltelefone usw., mit einer integrierten Bildaufnalunevorrichtung für videobasierte Fahrerassistenzfunktionen verwendet werden. Bei diesen mobilen Endgeräten ist jedoch die Positionierung der integrierten Büdaufnahmevorrichtung problematisch. Um den für Fahrerassistenzfunktionen erforderlichen Sichtbereich zu erfassen, muss die.Bildaufnahmevorrichtung innerhalb eines gewissen Raumbereiches befestigt und eine korrespondierende Blickrichtung im Rahmen einer Toleranz ausgerichtet werden. Durch die Erfüllung dieser Anforderungen kann jedoch zum einen die Ablesbarkeit der optischen Anzeigeinheit und die Bedienbarkeit des mobilen Endgerätes für den Fahrer eingeschränkt werden. Zudem ist nach jedem Entfernen und Neueinbau des mobilen Endgerätes ins Fahrzeug eine Feinjustierung durch den Anwender erforderlich. Ferner wird beim Design des mobilen Endgerätes eine entsprechend geeignete Position der Bildaufnahmevorrichtung in der Regel auf der Gehäuseseite vorgesehen, die der optischen Anzeigeeinheit gegenüberliegt. Zudem werden herkömmliche mobile Navigationsgeräte oder andere mobile Endgeräte in der Regel während längerer Fahrtunterbrechungen, z.B. über Nacht, aus dem Fahrzeug entfernt, wodurch die erforderliche häufige Feinjustierung bei jedem Neueinbau des mobilen Endgerätes ein potentielles Ärgernis für den Anwender darstellt.

In der Patentschrift US 5,246,193 wird beispielsweise eine Halterung für eine mobile Kamera beschrieben. Die beschriebene Halterung wird mit der mobilen Kamera verschraubt und über Saugbefestigungsvorrichtungen an einer Fahrzeugfrontscheibe befestigt.

Zudem wird in der Offenlegungsschrift DE 102 09 615 A1 eine Vorrichtung und ein Verfahren zur dauerhaften Fixierung eines Sensormittels an einer Fahrzeugscheibe beschrieben.

In der Offenlegungsschrift DE 10 2006 007 343 A1 wird eine Bilderfassungseinrichtung für ein Fahrerassistenzsystem beschrieben. Die beschriebene Bilderfassungseinrichtung umfasst ein mobiles Kommunikationsgerät, in welches ein Bildsensor bzw. eine Bilderfassungsvorrichtung integriert ist, sowie eine Halteeinrichtung für die Haltering des Kommunikationsgeräts im Fahrzeug. Die Halteeinrichtung umfasst einen Geräteadapter für die Aufnahme des Kommunikationsgeräts, einen fahrzeugtest angeordneten Fahrzeugadapter und ein zwischen dem Fahrzeugadapter und einem Geräteadapter angeordnetes Universalmodul.

In der internationalen Patentanmeldung WO 2008/052178 A2 wird ein Bildaufnahmesystem für ein Fahrzeug beschrieben. Das beschriebene Bildaufnahmesystem umfasst wenigstens eine Videokamera, welche im Bezug zur Fahrzeugstruktur angeordnet ist, um einen Fahrzeuginnenraum und/oder eine Fahrzeugumgebung aufzunehmen. Eine Anzeigeeinrichtung kommuniziert mit der Videokamera, um Videosignale von der Videokamera zu empfangen. Die Videokamera ist im Bezug auf die Fahrzeugstruktur beweglich ausgeführt. Die Videokamera kann beispielsweise in einem Mobiltelefon integriert sein, welches im Fahrzeug befestigt ist.

In der Patentanmeldung US 2003/0043029 A1 wird eine Anzeigeeinheit für Infrarotbilder in einem Fahrzeug beschrieben. Die beschriebene Anzeigeeinheit umfasst ein tragbares Gerät, welches herausnehmbar mit einem Armaturenbrett verbunden ist. Die angezeigten Bilder der Fahrzeugumgebung werden mit einer im Stoßfänger integrierten Infrarotkamera aufgenommen und auf einer Anzeige des tragbaren Gerätes ausgegeben. Zusätzlich kann das über die Anzeige ausgegebene Infrarotbild auf einen lichtdurchlässigen Schirm projiziert werden.

In der internationalen Patentanmeldung WO 2005/090124 A1 wird ein Büdverarbeitungs5ystem für Kraftfahrzeuge beschrieben. Das beschriebene Bildverarbeitungssystem umfasst zur Ausführung einer Fahrerassistenzfunktion ein mobiles Endgerät, einen im Fahrzeug installierten Halter zur temporären Aufnahme des mobilen Endgerätes und mindestens eine Bildaufnahmevorrichtung, die zur Unterstützung der Ausführung der Fahrerassistenzfunktion über eine Biidsignatieitung und mindestens eine im Halter angeordnete erste elektrische Schnittstelle mit dem mobilen Endgerät gekoppelt ist, wenn der Halter zur Ausführung der Fahrerassistenzfunktion das mobile Endgerät aufnimmt. Alternativ kann die Bildaufnahmevorrichtung im mobilen Endgerät integriert sein. An einer zusätzlichen Halterung der Bildaufnahmevorrichtung sind optische Linsen, Spiegel und/oder mechanische Schwenk-und/oder Neigeeinrichtungen vorgesehen, um Umgebungsinformationen gezielt an die Optik der Bildaufnahmevarrichtung umzuleiten, wobei das zugehörige mobile Endgerät an einer geschützten Stelle hinter einer Abdeckung im Fahrzeug angeordnet ist. Vorzugsweise werden im Zusammenhang mit dem beschriebenen Büdverarbeitungssystem.jedoch mobile Endgeräte mit integrierter Blldaufnahmevorrichtung eingesetzt.

Die erfindungsgemäße Geräteanordnung zur Ausführung einer Fahrerassistenzfunktion mit den Merkmalen des unabhängigen Patentanspruchs 1 hat demgegenüber den Vorteil, dass mindestens eine Bildaufnahmevorrichtung mit einem, insbesondere herausnehmbar, im Fahrzeug installierten Halter verbunden ist, der temporär ein mobiles Endgerät aufnimmt. Die Bildaufnahmevorrichtung ist erfindungsgemäß mechanisch fest oder arretierbar mit dem Halter verbunden. Die Bildaufnahmevorrichtung ist zur Unterstützung der Ausführung der Fahrerassistenzfunktion über eine Bildsignalleitung und mindestens eine im Halter angeordnete erste elektrische Schnittstelle mit dem mobilen Endgerät koppelbar, wenn der Halter zur Ausführung der Fahrerassistenzfunktion das mobile Endgerät aufnimmt. Die erfindungsgemäße Geräteanordnung ermöglicht in vorteilhafter Weise eine für den Anwender akzeptable Lösung zur Realisierung von anzeigenden und auswertenden Fahrerassistenzfunktionen auf mobilen Endgeräten. Die Bildübertragung zwischen der Bildaufnahmevorrichtung und dem mobilen Endgerät erfolgt über die Bildsignalleitung und die erste Schnittstelle in der Regel störungsfreier als bei einer drahtlosen Signalübertragung. Da nur das mobile Endgerät aus dem Halter entfernt wird, entfällt durch die am Halter verbleibende und dort befestigte Bildaufnahmevorrichtung der wiederholte Aufwand zur Feinjustierung der Bildaufnahmevorrichtung.

Durch die in den abhängigen Ansprüchen aufgeführten Maßnahmen und Weiterbildungen sind vorteilhafte Verbesserungen der im unabhängigen Patentanspruch 1 angegebenen Geräteanordnung zur Ausführung einer Fahrerassistenzfunktion möglich.

Besonders vorteilhaft ist, dass der Halter über eine Versorgungsleitung mit einer Energieversorgungseinheit verbunden ist, wobei die Versorgungsleitung mit der Bildaufnahmevorrichtung und über eine zweite elektrische Schnittstelle mit dem mobilen Endgerät koppelbar ist. Hierdurch kann die Bildaufnahmevorrichtung in vorteilhafter Weise eine im Halter vorhandene Energieversorgung für das mobile Endgerät mitbenutzen, ohne dass ein zusätzlicher Verkabelungsaufwand für den Anwender erforderlich ist Die Bildaufnahmevorrichtung ist beispielsweise mechanisch fest oder arretierbar mit dem Halter verbunden.

In Ausgestaltung der erfindungsgemäßen Geräteanordnung zur Ausführung einer Fahrerassistenzfunktion kann der Halter beispielsweise als Saugbefestigungsvorrichtung ausgeführt und an einer Fahrzeugscheibe befestigt werden. Alternativ kann der Halter auf dem Armaturenbrett befestigt werden.

In weiterer Ausgestaltung der erfindungsgemäßen Geräteanordnung ist die Bildaufnahmevorrichtung in den Halter integriert oder über einen Befestigungsarm mit dem Halter verbunden- Der Halter nimmt das mobile Endgerät beispielsweise in einem Aufnahmeschacht auf. Alternativ kann der Halter das mobile Endgerät über einen Aufnahmearm aufnehmen:

In weiterer Ausgestaltung der erfindungsgemäßen Geräteanordnung ist im Halter zwischen der Bildaufnahmevorrichtung und der ersten Schnittstelle eine Bildverarbeitungseinh6it eingeschleift, die eine Bildsignalauswertung, Bildsignalaufbereitung und/oder Bildsignalwandlung ausführen kann.

Das mobile Endgerät führt beispielsweise eine Navigationsassistenzfunktion und/oder eine Fahrspurerkennungsassistenzfunktion und/oder eine Nachtsichtassistenzfunktion und/oder eine Femlichtassistenzfunktion aus.

Ausführungsbeispiele der Erfindung sind in den Zeichnungen dargestellt und werden in der nachfolgenden Beschreibung näher erläutert.

Kurze Beschreibung der Zeichnungen
Figur 1 zeigt ein schematisches Blockdiagramm eines ersten Ausführungsbeispiels einer erfindungsgemäßen Geräteanordnung zur Ausführung einer Fahrerassistenzfunktion.
Figur 2 zeigt ein schematisches Blockdiagramm eines zweiten Ausführungsbeispiels einer erfindungsgemäßen Geräteanordnung zur Ausführung einer Fahrerassistenzfunktion.
Figur 3 zeigt ein schematisches Blockdiagramm eines dritten Ausführungsbeispiels einer erfindungsgemäßen Geräteanordnung zur Ausführung einer Fahrerassistenzfunktion.
Figur 4 zeigt ein schematisches Blockdiagramm eines vierten Ausführungsbeispiels einer erfindungsgemäßen Geräteanordnung zur Ausführung einer Fahrerassistenzfunktion.

Ausführungsformen der Erfindung

In den Zeichnungen bezeichnen gleiche Bezugszeichen Elemente bzw. Komponenten, welche gleiche bzw. analoge Funktionen ausführen.

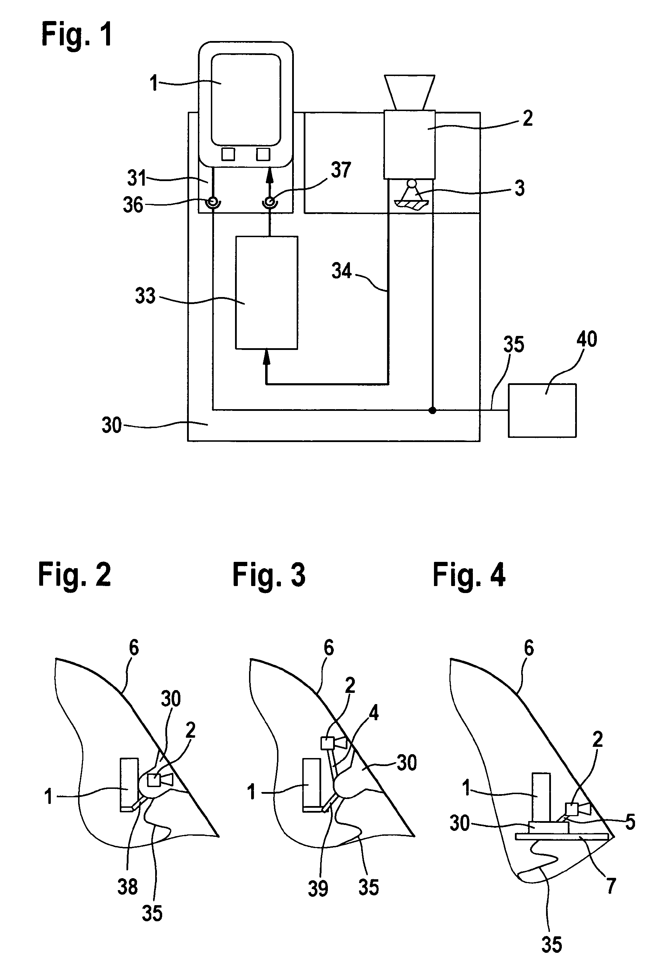

Wie aus Fig. 1 ersichtlich ist, umfasst ein erstes Ausführungsbeispiel einer erfindungsgemäßen Geräteanordnung zur Ausführung einer Fahrerassistenzfunktion ein mobiles Endgerät 1 und einen herausnehmbar im Fahrzeug installierten Halter 30 zur temporären Aufnahme des mobilen Endgerätes 1. Der Halter 30 kann im Fahrzeug beispielsweise an einer Fahrzeugscheibe oder auf einem Armaturenbrett befestigt werden. Das mobile Endgerät 1 kann beispielsweise eine Navigationsassistenzfunktion und/oder eine Fahrspurerkennungsassistenzfunktion und/oder eine Nachtsichtassistenzfunktion und/oder eine FemHchtassistenzfunktion ausführen. Im dargestellten ersten Ausführungsbeispiel ist eine Bildaufnahmevorrichtung 2, die beispielsweise einen CCD- oder CMOS-Sensorchip umfasst, in den Halter 30 für das mobile Endgerät 1 integriert und über eine Arretierung 3 fest mit dem Halter 30 verbunden, wobei die Bildaufnahmevorrichtung 3 zur Einstellung des Sichtbereichs und zur Feinjustierung um mindestens eine Drehachse verschwenkt werden kann. Zur Ausführung der Fahrerassistenzfianktion ist das mobile Endgerät 2 über einen Aufiiahnieschacht 31 in den Halter eingeführt. Zur Unterstützung der Ausführung der Fahrerassistenzfunktion ist die Bitdaufnahmevorrichtung 2 über eine Bildsignalleitung 34 und eine im Halter 30 angeordnete erste elektrische Schnittstelle 37 mit dem mobilen Endgerät 1 gekoppelt. Zusätzlich ist im dargestellten Ausführungsbeispiel zwischen der Bildaufnahmevorrichtung 2 und der ersten Schnittstelle 37 eine Bildverarbeitungseinheit 33 eingeschleift, welche die Bildsignale der Bildaufnahmevorrichtung für die Verwendung im mobilen Endgerät 1 anpasst und/oder umwandelt und/oder aufbereitet. Wie weiter aus Fig. 1 ersichtlich ist, ist der Halter 30 über eine Versorgungsleitung 35 mit einer Energieversorgungseinheit 40 verbunden. Als Energieversorgungseinheit 40 kann beispielsweise das Fahrzeugbordnetz verwendet werden. Die Versorgungsleitung 35 ist im dargestellten Ausführungsbeispiel innerhalb des Halters 30 direkt mit der Bildaufnahmevorrichtung 2 verbunden und kann über eine zweite elektrische Schnittstelle 36 mit dem mobilen Endgerät 1 gekoppelt werden, wenn das mobile Endgerät in den Aufnahmeschacht 31 eingeführt ist.

Nachfolgend werden unter Bezugnahme auf Fig. 2 bis 4 weitere Ausführungsformen der erfindungsgemäßen Geräteanordnung beschrieben.

Wie aus Fig. 2 ersichtlich ist, ist der Halter 30 gemäß dem zweiten Ausführungsbeispiel als Saugbefestigungsvorrichtung ausgeführt und an einer Fahrzeugscheibe 6 befestigt. Gemäß dem zweiten Ausführungsbeispiel ist die Bildaufilahmcvorrichtung 2 in den Saugnapf des als Saugbefestigungsvorrichtung ausgeführten Halters 30 integriert. Wie weiter aus Fig. 2 ersichtlich ist, nimmt der Halter 30 das mobile Endgerät 1 über einen Aufnahmearm 38 auf, in welchem die entsprechenden nicht dargestellten Schnittstellen zur Übertragung der Bildsignale und zur Energieversorgung angeordnet sind, wobei die Energieversorgung der Bildaufiiahmevorrichtung 2 und des mobilen Endgerätes 1 analog zum ersten Ausführungsbeispiel über die Energieversorgungsleitung 35 erfolgt.

Wie aus Fig. 3 ersichtlich ist, ist der Halter 30 gemäß dem dritten Ausführungsbeispiel analog zum zweiten Ausführungsbeispiel als Saugbefestigungsvorrichtung ausgeführt und an der Fahrzeugscheibe 6 befestigt. Zudem nimmt der Halter 30 das mobile Endgerät 1 über einen Aufnahmearm 39 auf, in welchem die entsprechenden nicht dargestellten Schnittstellen zur Übertragung der Bildsignale und zur Energieversorgung angeordnet sind. Im Unterschied zum zweiten Ausführungsbeispiel ist die Bildaufnalunevorrichtung 2 über eine Befestigungsarm 4 mit dem als Saugbefestigungsvorrichtung ausgeführten Halter 30 fest verbunden. Die Energieversorgung der Bildaufnahmevorrichtung 2 und des mobilen Endgerätes 1 erfolgt analog zum ersten und zweiten Ausführungsbeispiel über die Energieversorgungsleitung 35.

Wie aus Fig. 4 ersichtlich ist, ist der Halter 30 gemäß dem vierten Ausführungsbeispie! auf dem Armaturenbrett 7 befestigt. Der Halter 30 nimmt das mobile Endgerät 1 analog zum ersten Ausfiihrungsbeispiel über einen nicht dargestellten Aufnahmeschacht auf, in welchem die entsprechenden nicht dargestellten Schnittstellen zur Übertragung der Bildsignale und zur Energieversorgung angeordnet sind. Analog zum dritten Ausführungsbeispiel ist die Bildaufnahmevorrichtung 2 über einen Befestigungsarm 5 mit dem Halter 30 fest verbunden. Die Energieversorgung der Bildaufuahmevorrichtw1g 2 und des mobilen Endgerätes 1 erfolgt analog zu den anderen Ausführungsbeispielen über die Energieversorgungsleitung 35.

In einer weiteren Ausfilhrungsform umfasst eine erfindungsgemäße Geräteanordnung zur Ausführung einer Fahrerassistenzfiznktion ein mobiles Navigationsgerät als mobiles Endgerät und ebenfalls einen, insbesondere herausnehmbar, im Fahrzeug installierten Halter zur temporären Aufnahme des mobilen Navigationsgerätes. Das mobile Navigationsgerät stellt Funktionen zur Navigation, wie beispielsweise Anzeigen zur Orientierung und Wegweisung des Fahrers und/oder Anzeige von gespeicherten Verkehrszeichen, zur Verfügung. In diesem weiteren Ausführungsbeispiel ist eine Bildaufiiahnievorrichtung, insbesondere eine CCD- oder CMOS-Kamera, samt einer Streulichtblende am Halter befestigt. Die Streulichtblende ist derart gestaltet, dass der Einfall von Streulicht in die Bildaufnahmevorrichtung verringert wird. In einer Variante dieses Ausführungsbeispiels umfasst der Halter einen Saugnapf, der zur Befestigung des Halters an der Windschutzscheibe des Fahrzeugs dient, wobei im Saugnapf die Bildaufnahmevorrichtung derart integriert ist, dass der Saugnapf als Streulichtblende wirkt. Zur Ausführung der Fahrerassistenzfunktion ist das mobile Navigationsgerät ebenfalls über einen Aufnahmeschacht in den Halter eingeführt. Ferner ist die Bildaufnahmevorrichtung über eine Bildsignalleitung und eine im Halter angeordnete erste elektrische Schnittstelle mit dem mobilen Navigationsgerät gekoppelt, wobei eine Bildverarbeitungseinheit zwischen der Bildaufnahmevorrichtung und der ersten Schnittstelle eingeschleift ist, welche die Bildsignale der Bildaufnahmevorrichtung für die Verwendung im mobilen Navigationsgerät anpasst und/oder umwandelt und/oder aufbereitet. Die Geräteanordnung stellt kamerabasierte Fahrerassistenzfunktionen zur Verfügung, wobei die Anzeigen und Bedienelemente des mobilen Navigationsgeräts die Mensch-Maschinen-Schnittstelle der Fahrerassistenzfunktionen sind. Als Fahrerassistenzfunktionen werden in diesem Ausführungsbeispiel von der erfindungsgemäße Geräteanordnung darstellende Fahrerassistenzfunktionen, wie Fahrspurerkennungsassistenzfunktion und/oder eine Nachtsichtassistenzfunktion und/oder Verkehrszeichenanzeigeassistenzfunlaion, und/oder nichtdarstellende Fahrerassistenzfunktionen, wie die Fernlichtassistenzfunlction, zur Verfügung gestellt. In diesem Ausführungsbeispiel ist die Bildaufnahmevorrichtung so im Fahrzeug ausgerichtet, dass die Bildaufnahnevorrichtung durch die Windschutzscheibe den Blick nach vorne hat. In einer Variante dieses Ausführungsbeispiels ist die Bildaufnalunevorriehtung als Stereokamera ausgeführt. In einer weiteren Variante dieses Ausführungsbeispiels ist zusätzlich eine Bildaufnahmevorrichtung mit Blick nach hinten, also eine Rückfahrkamera, mit dem mobilen Navigationsgerät verbunden. Vorzugsweise ist die Rückfahrkamera über eine Funkschnittstelle, insbesondere eine Wireless Local Area Network-Schnittstelle (WLAN), mit dem mobilen Navigationsgerät verbunden. Alternativ oder zusätzlich erfolgt die Datenverbindung zwischen Rückfahrkamera und dem mobilen Navigationsgerät drahtgebunden. In einer weiteren Variante dieses Ausfiihrungsbeispiels ist das mobile Navigationsgerät vorzugsweise durch eine Funkschnittstelle mit weiteren Fahrzeugsteuergeräten verbunden. Diese Funkschnittstelle ist insbesondere als WLAN-Schnittstelle ausgeführt. Die Funlcschnittstelle dient zum Empfang und/oder Senden und/oder Austausch von Fahrzeugdaten, wie beispielsweise Fahrzeuggeschwindigkeit, Lenkwinkel, eingelegter Gang, wie Rückwärtsgang, Außentemperatur, Radschlupf und/oder Wetterbedingungen, wie Regen. Einzelne diese Daten oder alle werden vom mobilen Navigationsgerät entweder dem Fahrer des Fahrzeugs zur Anzeige gebracht oder die Daten werden bei der Bereitstellung der Fahrerassistenzfunktion verwendet. Beispielsweise zeigt in diesem Ausfiihrungsbeispiel das mobile Navigationsgerät die Außentemperatur an. Ferner wird in diesem Ausführungsbeispiel die Fahrzeuggeschwindigkeit bei der Bereitstellung der Fahrerassistenzfunktion Fahrspurerkennungsassistenzfunktion berücksichtigt.

Die erfindungsgemäße Geräteanordnung zur Ausführung einer Fahrerassistenzfunktion stellt eine Möglichkeit zur Realisierung videobasierter Fahrerassistenzfunktionen auf mobilen Endgeräten dar. Das mobile Endgerät kann einfach entfernt und wieder montiert werden, ohne die Ausrichtung und Position der übrigen Komponenten zu verändern. So ermöglicht die erfindungsgemäße Geräteanordnung beispielsweise, dass Navigationshinweise in ein Live-Videobild eingeblendet werden können. Die Erfindung ist nicht auf mobile Navigationsgeräte eingeschränkt, sondern das mobile Endgerät kann auch ein persönlicher digitaler Assistent (PDA) und/oder ein Mobiltelefon sein.

## Patentansprüche

1. Geräteanordnung zur Ausführung einer Fahrerassistenzfunktion mit einem mobilen Endgerät (1), einem im Fahrzeug installierten Halter (30) zur temporären Aufnahme des mobilen Endgerätes (1) und mindestens einer Bildaufnahmevorrichtung (2), die zur Unterstützung der Ausführung der Fahrerassistenzfunktion über eine Bildsignalleitung (34) und mindestens eine im Halter (30) angeordnete erste elektrische Schnittstelle (37) mit dem mobilen Endgerät (1) koppelbar ist, wenn der Halter (30) zur Ausführung der Fahrerassistenzfunktion das mobile Endgerät (2) aufnimmt, **dadurch gekennzeichnet, dass** die mindestens eine Bildaufnahmevorrichtung (2) getrennt vom mobilen Endgerät (1) mechanisch fest oder arretierbar mit dem Halter (30) verbunden ist.

2. Geräteanordnung nach Anspruch 1, **dadurch gekennzeichnet, dass** der Halter (30) über eine Versorgungsleitung (35) mit einer Energieversorgungseinheit (40) verbunden ist, wobei die Versorgungsleitung (35) mit der Bildaufnahmevorrichtung (2) und über eine zweite elektrische Schnittstelle (36) mit dem mobilen Endgerät (1) koppelbar ist.

3. Geräteanordnung nach Anspruch 1 oder 2, **dadurch gekennzeichnet, dass** der Halter (30) als Saugbefestigungsvorrichtung ausgeführt und an einer Fahrzeugscheibe (6) befestigt ist.

4. Geräteanordnung nach Anspruch 1 oder 2, **dadurch gekennzeichnet, dass** der Halter (30) auf dem Armaturenbrett (7) befestigt ist.

5. Geräteanordnung nach einem der Ansprüche 1 bis 4, **dadurch gekennzeichnet, dass** die Bildaufnahmevorrichtung (2) in den Halter (30) integriert ist oder über einen Befestigungsarm (4, 5) mit dem Halter (30) verbunden ist.

6. Geräteanordnung nach einem der Ansprüche 1 bis 5, **dadurch gekennzeichnet, dass** der Halter (30) das mobile Endgerät (1) in einen Aufnahmeschacht (31) aufnimmt.

7. Geräteanordnung nach einem der Ansprüche 1 bis 6, **dadurch gekennzeichnet, dass** der Halter (30) das mobile Endgerät (1) über einen Aufnahmearm (38, 39) aufnimmt.

8. Geräteanordnung nach einem der Ansprüche 1 bis 7, **dadurch gekennzeichnet, dass** im Halter (30) zwischen der Bildaufnahmevorrichtung (2) und der ersten Schnittstelle (73) ein Bildverarbeitungseinheit (33) eingeschleift ist.

9. Geräteanordnung nach einem der Ansprüche 1 bis 8, **dadurch gekennzeichnet, dass** das mobile Endgerät (1) eine Navigationsassistenzfunktion und/oder eine Fahrspurerkennungsassistenzfunktion und/oder eine Nachtsichtassistenzfunktion und/oder eine Fernlichtassistenzfunktion ausführt.

10. Geräteanordnung nach einem der Ansprüche 1 bis 10, **dadurch gekennzeichnet, dass** der Halter (30) derart gestaltet ist, dass der Halter aus dem Fahrzeug herausnehmbar ist.

11. Geräteanordnung nach Anspruch 3, **dadurch gekennzeichnet, dass** die Bildaufnahmevorrichtung (2) in einem Saugnapf der Saugbefestigungsvorrichtung integriert ist.

12. Geräteanordnung nach einem der vorhergehenden Ansprüche, **dadurch gekennzeichnet, dass** das mobile Endgerät (1) ein mobiles Navigationsgerät ist.

13. Geräteanordnung nach einem der vorhergehenden Ansprüche, **dadurch gekennzeichnet, dass** das mobile Endgerät (1) zur Datenübertragung über eine Funkschnittstelle mit einem Fahrzeugsteuergerät und/oder einer weiteren Bildaufnahmevorrichtung verbunden ist.

## Claims

1. Device arrangement for executing a driver assistance function having a mobile terminal (1), a holder (30) which is installed in the vehicle and has the purpose of temporarily holding the mobile terminal (1) and at least one image recording device (2) which can be coupled to the mobile terminal (1) in order to assist execution of the driver assistance function via an image signal line (34) and at least one first electrical interface (37) arranged in the holder (30), when the holder (30) holds the mobile terminal (2) in order to execute the driver assistance function, **characterized in that** the at least one image recording device (2) is connected to the holder (30) in a mechanically fixed or lockable fashion separately from the mobile terminal (1).

2. Device arrangement according to Claim 1, **characterized in that** the holder (30) is connected to a power supply unit (40) via a supply line (35), wherein the supply line (35) can be coupled to the image recording device (2), and can be coupled to the mobile terminal (1) via a second electrical interface (36).

3. Device arrangement according to Claim 1 or 2, **characterized in that** the holder (30) is embodied as a suction attachment device and is attached to a vehicle window (6).

4. Device arrangement according to Claim 1 or 2, **characterized in that** the holder (30) is attached to the dashboard (7).

5. Device arrangement according to one of Claims 1 to 4, **characterized in that** the image recording device (2) is integrated into the holder (30) or is connected to the holder (30) via an attachment arm (4, 5).

6. Device arrangement according to one of Claims 1 to 5, **characterized in that** the holder (30) holds the mobile terminal (1) in a holding shaft (31).

7. Device arrangement according to one of Claims 1 to 6, **characterized in that** the holder (30) holds the mobile terminal (1) via a holding arm (38, 39).

8. Device arrangement according to one of Claims 1 to 7, **characterized in that** an image processing unit (33) is connected into the holder (30) between the image recording device (2) and the first interface (73).

9. Device arrangement according to one of Claims 1 to 8, **characterized in that** the mobile terminal (1) executes a navigation assistance function and/or a lane detection assistance function and/or a night vision assistance function and/or a full beam assistance function.

10. Device arrangement according to one of Claims 1 to 9, **characterized in that** the holder (30) is configured in such a way that the holder can be removed from the vehicle.

11. Device arrangement according to Claim 3, **characterized in that** the image recording device (2) is integrated into a suction cup of the suction attachment device.

12. Device arrangement according to one of the preceding claims, **characterized in that** the mobile terminal (1) is a mobile navigation device.

13. Device arrangement according to one of the preceding claims, **characterized in that** the mobile terminal (1) is connected to a vehicle control unit and/or a further image recording device for the purpose of transmitting data over a radio interface.

## Revendications

1. Agencement d'appareils pour exécuter une fonction d'aide au conducteur à l'aide d'un appareil terminal mobile (1), d'un support (30) installé dans le véhicule pour accueillir temporairement l'appareil terminal mobile (1) et d'au moins un dispositif d'enregistrement d'image (2) pouvant être couplé à la fonction d'aide au conducteur par le biais d'au moins un câble de signal d'image (34) pour réaliser l'exécution et d'au moins une première interface électrique (37) disposée dans le support (30) à l'aide d'un appareil terminal mobile (1), lorsque le support (30) reçoit l'appareil terminal mobile (2) pour exécuter la fonction d'aide au conducteur, **caractérisé en ce que** l'au moins un dispositif d'enregistrement d'image (2) est relié fixement de façon mécanique, séparément par rapport à l'appareil terminal mobile (1), ou de façon à pouvoir être bloqué avec le support (30).

2. Agencement d'appareils selon la revendication 1, **caractérisé en ce que** le support (30) est relié à une unité d'alimentation en énergie (40) par le biais d'un câble d'alimentation (35), le câble d'alimentation (35) pouvant être couplé au dispositif d'enregistrement d'image (2) et à l'appareil terminal mobile (1) par le biais d'une deuxième interface électrique (36).

3. Agencement d'appareils selon la revendication 1 ou 2, **caractérisé en ce que** le support (30) prend la forme d'un dispositif de fixation par aspiration et est fixé contre une vitre du véhicule (6).

4. Agencement d'appareils selon la revendication 1 ou 2, **caractérisé en ce que** le support (30) est fixé sur le tableau de bord (7).

5. Agencement d'appareils selon l'une quelconque des revendications 1 à 4, **caractérisé en ce que** le dispositif d'enregistrement d'image (2) est intégré dans le support (30) et relié au support (30) par le biais d'un bras de fixation (4, 5).

6. Agencement d'appareils selon l'une quelconque des revendications 1 à 5, **caractérisé en ce que** le support (30) reçoit l'appareil terminal mobile (1) dans une fente réceptrice (31).

7. Agencement d'appareils selon l'une quelconque des revendications 1 à 6, **caractérisé en ce que** le support (30) loge l'appareil terminal mobile (1) par le biais d'un bras récepteur (38, 39).

8. Agencement d'appareils selon l'une quelconque des revendications 1 à 7, **caractérisé en ce qu'**une unité de traitement d'image (33) est intégrée dans le support (30) entre le dispositif d'enregistrement d'image (2) et la première interface (73).

9. Agencement d'appareils selon l'une quelconque des revendications 1 à 8, **caractérisé en ce que** l'appareil terminal mobile (1) exécute une fonction d'aide à la navigation et/ou une fonction d'aide à la reconnaissance de voie et/ou une fonction d'aide à la vision de nuit et/ou une fonction d'aide par gestion des feux de route.

10. Agencement d'appareils selon l'une quelconque des revendications 1 à 9, **caractérisé en ce que** le support (30) est réalisé de telle sorte que le support peut être retiré du véhicule.

11. Agencement d'appareils selon la revendication 3, **caractérisé en ce que** le dispositif d'enregistrement d'image (2) est intégré dans une coupelle aspirante du dispositif de fixation par aspiration.

12. Agencement d'appareils selon l'une quelconque des revendications précédentes, **caractérisé en ce que** l'appareil terminal mobile (1) est un appareil de navigation mobile.

13. Agencement d'appareils selon l'une quelconque des revendications précédentes, **caractérisé en ce que** l'appareil terminal mobile (1) est relié à un appareil de commande de véhicule et/ou à un autre dispositif d'enregistrement d'image par le biais d'une interface radio pour la transmission de données.
